# EUROPÄISCHE PATENTSCHRIFT

(11) **EP 1 280 833 B1**
(45) Veröffentlichungstag und Bekanntmachung des Hinweises auf die Patenterteilung: **03.03.2004**
(21) Anmeldenummer: 01933942.3
(22) Anmeldetag: 09.05.2001
(51) Int. Cl.: C08F 8/44

(54) **POLYELEKTROLYTKOMPLEXE UND EIN VERFAHREN ZU IHRER HERSTELLUNG**
POLYELECTROLYTE COMPLEXES AND A METHOD FOR PRODUCTION THEREOF
COMPLEXES DE POLYELECTROLYTES ET LEUR PROCEDE DE PRODUCTION

(30) Priorität: 09.05.2000 US 202937 P
(43) Veröffentlichungstag der Anmeldung: 05.02.2003
(73) Patentinhaber: BASF AKTIENGESELLSCHAFT, 67056 Ludwigshafen (DE)
(72) Erfinder: NÖRENBERG, Ralf, 55218 Ingelheim (DE); HILDEBRANDT, Sören, 67346 Speyer (DE); KLUGE, Michael, 67071 Ludwigshafen (DE); BOECKH, Dieter, 67117 Limburgerhof (DE); PANANDIKER, Rajan K., West Chester, Ohio 45069 (US); WERTZ, William C., West Harrison, Indiana 47060 (US); SHERRI, Randall L., Hamilton, Ohio 45011 (US)
(86) Internationale Anmeldenummer: PCT/EP2001/005230
(87) Internationale Veröffentlichungsnummer: WO 2001/085819

(56) Entgegenhaltungen:
- EP-A- 0 245 674
- EP-A- 0 492 188
- DE-A- 4 320 433
- DE-A- 4 428 641
- US-A- 3 344 124
- US-A- 4 078 568
- US-A- 4 118 554
- US-A- 4 508 128
- US-A- 6 025 322
- DATABASE WPI Section Ch, Week 199815 Derwent Publications Ltd., London, GB; Class A14, AN 1998-163701 XP002184644 & JP 10 030007 A (NIPPON KAYAKU K.K.), 3. Februar 1998 (1998-02-03)

## Beschreibung

Die Erfindung betrifft Polyelektrolytkomplexe aus kationischen und anionischen Polymeren sowie ein Verfahren zu ihrer Herstellung.

Es ist seit langem bekannt, daß kationische und anionische Polymere durch Ladungsneutralisation aggregieren und dabei Komplexe bilden, die neue Eigenschaften zeigen, z.B. ein Phasenoder Löslichkeitsverhalten, das weder für die basische oder kationische Komponente noch für die saure oder anionische Komponente charakteristisch ist. Aus der EP-A 0 492 188 sind beispielsweise Komplexe bekannt, die durch Mischen einer wäßrigen Lösung von beispielsweise Natriumpolymethacrylat mit einer wäßrigen Lösung von Ammoniumverbindungen wie Dodecyltrimethylammoniumbromid hergestellt werden. Die Komplexe wirken als Sorbens und werden beispielsweise zur Reinigung von Abwässern von organischen Verbindungen verwendet. Die Stabilität und das Wasseraufnahmevermögen von Komplexen wird beispielsweise in WO-A-96/02276 im Hinblick auf die Freisetzung von Wirkstoffen und in JP/A-62/112654 bezüglich der Papierherstellung beschrieben.

Aus der WO-A-98/17762 ist die Verwendung von polykationischen Kondensationsprodukten, die beispielsweise erhältlich sind durch Kondensation von Piperazin, substituierten Piperazinen, Imidazol oder alkylsubstituierten Imidazolen mit Vernetzern, als farbübertragungsinhibierender und farbablösungsvermindernder Zusatz zu Waschmitteln und Wäschenachbehandlungsmitteln bekannt. Die Kondensationsprodukte können gegebenenfalls auch in quaternierter Form vorliegen.

Der vorliegenden Erfindung liegt die Aufgabe zugrunde, neue Stoffe zur Verfügung zu stellen, deren kationische Komponente bei der Anwendung im Vergleich mit der alleinigen Verwendung der kationischen Komponente des Komplexes deutlich weniger von anionischen Verbindungen wie Tensiden beeinflußt wird.

Die Aufgabe wird erfindungsgemäß gelöst mit Polyelektrolytkomplexen aus kationischen und anionischen Polymeren, wenn sie aus
(a) kationischen Kondensaten aus (i) mindestens einem Amin aus der Gruppe der linearen Alkylamine, verzweigten Alkylamine, Cycloalkylamine, Alkoxyamine, Aminoalkohole, cyclischen Amine mit mindestens einem Stickstoffatom im Ring, Alkylendiamine, Polyetherdiamine, Polyalkylenpolyamine, Mischungen eines der genannten Amine mit mindestens einer Aminosäure oder einem Salz davon, Reaktionsprodukte der genannten Amine mit mindestens einem anionische Gruppen enthaltenden Alkylierungsmittel, wobei pro Mol NH-Gruppen der Amine 0,04 bis 0,6 Mol mit anionische Gruppen enthaltenden Alkylierungsmitteln substituiert sind, und deren Mischungen und (ii) einem Vernetzungsmittel aus der Gruppe der Epihalogenhydrine, Bishalogenhydrine von Diolen, Bishalogenhydrine von Polyalkylenglykolen, Bishalogenhydrine von Polytetrahydrofuranen, Alkylendihalogenide, Alkylentrihalogenide, Bisepoxide, Trisepoxide, Tetraepoxide und/oder Mischungen der genannten Verbindungen und/oder quaternierten kationischen Kondensaten aus (i) und (ii) sowie
(b) anionischen Verbindungen mit mindestens drei anionischen Gruppen
bestehen und wenn das Ladungsverhältnis von anionischen zu kationischen Polymeren 0,01 bis 20 beträgt.

Als Amine sind im einzelnen zu nennen Methylamin, Ethylamin, n-Propylamin, Isopropylamin, n-Butylamin, Isobutylamin, Pentylamin, Hexylamin, Heptylamin, Octylamin, 2-Ethylhexylamin, Isooctylamin, Nonylamin, Isononylamin, Decylamin, Undecylamin, Dodecylamin, Tridecylamin, Stearylamin, Palmitylamin,

Dimethylamin, Diethylamin, Dipropylamin, Dibutylamin, Dipentylamin, Dihexylamin, Bis-(2-ethylhexyl)amin, Ditridecylamin, N-Methylbutylamin, N-Ethylbutylamin, Piperidin, Morpholin, Pyrrolidin,

2-Methoxyethylamin, 2-Ethoxyethylamin, 3-Methoxypropylamin, 3-Ethoxypropylamin, 3-[(2-Ethylhexyl)oxy]-1-propanamin, 3-[(2-Methoxyethoxy]-1-propanamin, 2-Methoxy-N-(2-methoxyethyl)ethanamin,

2-Aminoethanol, 3-Amino-1-propanol, 1-Amino-2-propanol, 2-(2-Aminoethoxy)ethanol, 2-[(2-Aminoethyl)amino]ethanol, 2-(Methylamino)ethanol, 2-(Ethylamino)ethanol, 2-(Butylamino)ethanol, Diethanolamin, 3-[(2-Hydroxyethyl)amino]1-propanol, Diisopropanolamin, Bis-(2-hydroxyethyl)aminoethylamin, Bis-(2-hydroxypropyl)aminoethylamin, Bis-(2-hydroxyethyl)aminopropylamin, Bis-(2-hydroxypropyl)aminopropylamin,

Cyclopentylamin, Cyclohexylamin, N-Methylcyclohexylamin, N-Ethylcyclohexylamin, Dicyclohexylamin, Ethylendiamin, Propylendiamin, Butylendiamin, Neopentyldiamin, Hexamethylendiamin, Octamethylendiamin, Isophorondiamin, 4,4'-Methylenbiscyclohexylamin, 4,4'-Methylenbis(2-methylcyclohexylamin), 4,7-Dioxadecyl-1,10-diamin, 4,9-Dioxadodecyl-1,12-diamin, 4,7,10-Trioxatridecyl-1,13-diamin, 2-(Ethylamino)ethylamin, 3-(Methylamino)propylamin, 3-(Cyclohexylamino)propylamin, 3-Aminopropylamin, 2-(Diethylamino)ethylamin, 3-(Dimethylamino)propylamin, 3-(Diethylamino)propylamin, Dipropylentriamin, Tripropylentetramin, N,N-Bis(aminopropyl)methylamin, N,N-Bis(aminopropyl)ethylamin, N,N-Bis(aminopropyl)hexylamin, N,N-Bis(aminopropyl)octylamin, 1,1-Dimethyldipropylentriamin, N,N-Bis-(3-dimethylaminopropyl)amin, N,N''-1,2-Ethandiylbis-(1,3-propandiamin), Diethylentriamin, Bis(aminoethyl)ethylendiamin, Bis(aminopropyl)ethylendiamin, Bis(hexamethylen)triamin, N-(Aminoethyl)hexamethylendiamin, N-(Aminopropyl)hexamethylendiamin, N-(Aminopropyl)ethylendiamin, N-(Aminoethyl)butylendiamin, N-(Aminopropyl)butylendiamin, Bis(aminoethyl)hexamethylendiamin, Bis(aminopropyl)hexamethylendiamin, Bis(aminoethyl)butylendiamin, Bis(aminopropyl)butylendiamin, 4-Aminomethyloctan-1,8-diamin und N,N-Diethyl-1,4-pentandiamin.

Cyclische Amine mit mindestens einem Stickstoffatom in einer Ringstruktur sind zum Beispiel Monoaminoalkylpiperazine, Bis(aminoalkyl)piperazine, Monoaminoalkylimidazole, Aminoalkylmorpholine, Aminoalkylpiperidine und Aminoalkylpyrrolidine. Die Monoaminoalkylpiperazine sind zum Beispiel 1-(2-Aminoethyl)piperazin und 1-(3-Aminopropyl)piperazin. Bevorzugte Monoaminoalkylimidazole enthalten 2 bis 8 Kohlenstoffatome in der Alkylgruppe. Beispiele geeigneter Verbindungen sind 1-(2-Aminoethyl)imidazol und 1-(3-Aminopropyl)imidazol. Geeignete Bis(aminoalkyl)piperazine sind zum Beispiel 1,4-Bis-(2-aminoethyl)piperazin und 1,4-Bis(3-aminopropyl)piperazin. Bevorzugte Aminoalkylmorpholine sind Aminoethylmorpholin und 4-(3-Aminopropyl)morpholin. Weitere bevorzugte Verbindungen dieser Gruppe sind Aminoethylpiperidin, Aminopropylpiperidin und Aminopropylpyrrolidin.

Cyclische Amine mit mindestens zwei reaktiven Stickstoffatomen im Ring sind zum Beispiel Imidazol, C-alkylsubstituierte Imidazole mit 1 bis 25 Kohlenstoffatomen in der Alkylgruppe wie 2-Methylimidazol, 2-Ethylimidazol, 2-Propylimidazol, 2-Isopropylimidazol und 2-Isobutylimidazol, Imidazolin, C-alkylsubstituierte Imidazoline mit 1 bis 25 Kohlenstoffatomen in der Alkylgruppe und Arylimidazoline wie 2-Phenylimdazolin und 2-Tolylimidazolin, Piperazin, N-Alkylpiperazine mit 1 bis 25 Kohlenstoffatomen in der Alkylgruppe wie 1-Ethylpiperazin, 1-(2-Hydroxy-1-ethyl)piperazin, 1-(2-Hydroxy-1-propyl)piperazin, 1-(2-Hydroxy-1-butyl)piperazin, 1-(2-Hydroxy-1-pentyl)piperazin, 1-(2,3-Dihydroxy-1-propyl)piperazin, 1-(2-Hydroxy-3-phenoxyethyl)piperazin, 1-(2-Hydroxy-2-phenyl-1-ethyl)piperazin,

N,N'-Dialkylpiperazine mit 1 bis 25 Kohlenstoffatomen in der Alkylgruppe, zum Beispiel 1,4-Dimethylpiperazin, 1,4-Diethylpiperazin, 1,4-Dipropylpiperazin, 1,4-Dibenzylpiperazin, 1,4-Bis(2-hydroxy-1-ethyl)piperazin, 1,4-Bis(2-hydroxy-1-propyl)piperazin, 1,4-Bis(2-hydroxy-1-butyl)piperazin, 1,4-Bis(2-hydroxy-1-pentyl)piperazin und 1,4-Bis(2-hydroxy-2-phenyl-1-ethyl)piperazin. Weitere cyclische Amine mit mindestens zwei reaktiven Stickstoffatomen sind Melamin und Benzimidazole wie 2-Hydroxybenzimidazol und 2-Aminobenzimidazol.

Bevorzugte cyclische Amine mit mindestens zwei reaktiven Stickstoffatomen sind Imidazol, 2-Methylimidazol, 4-Methylimidazol und Piperazin.

Nach einer bevorzugten Ausführungsform der Erfindung wählt man das Amin aus der Gruppe bestehend aus (i) mindestens einem cyclischen Amin mit mindestens zwei reaktiven Stickstoffatomen und (ii) Mischungen mindestens eines cyclischen Amins mit mindestens zwei reaktiven Stickstoffatomen mit mindestens einem weiteren Amin mit 1 bis 6 Stickstoffatomen aus. Beispiele weiterer Amine mit 1 bis 6 Stickstoffatomen, von denen mindestens eines nicht quaterniert vorliegt, sind lineare Alkylamine mit 1 bis 22 Kohlenstoffatomen in der Alkylgruppe, verzweigte Alkylamine, Cycloalkylamine, Alkoxyamine, Aminoalkohole, cyclische Amine mit mindestens einem Stickstoffatom in einer Ringstruktur, Alkylendiamine, Polyetherdiamine sowie Polyalkylenpolyamine mit 3 bis 6 Stickstoffatomen.

Bevorzugte Amine zum Einsatz in Mischung mit mindestens einem cyclischen Amin mit mindestens zwei reaktiven Stickstoffatomen sind Methylamin, Ethylamin, Propylamin, Ethylendiamin, 1,4-Diaminobutan, 1,2-Diaminobutan, 1,3-Diaminopropan, 1,2-Diaminopropan, Hexamethylendiamin, Bishexamethylentriamin, Diethylentriamin, Dipropylentriamin, Triethylentetramin, Tetraethylenpentamin, Dimethylaminopropylamin und N,N-Bis-(3-aminopropyl)-N-methylamin.

Ganz besonders bevorzugte Amine zum Einsatz in Mischung mit mindestens einem cyclischen Amin mit mindestens zwei reaktiven Stickstoffatomen sind Ethylendiamin, 1,3-Diaminopropan, Hexamethylendiamin, Dimethylaminopropylamin und N,N-Bis-(3-aminopropyl)-N-methylamin.

Dabei ist unter dem Ausdruck "reaktives Stickstoffatom" zu verstehen, daß dieses Stickstoffatom zur Reaktion mit beispielsweise einem Alkylierungsmittel, z.B. Benzylchlorid, oder mit einem Vernetzer, z.B. Ethylenchlorid oder Epichlorhydrin, fähig ist und schließt quaternierte Stickstoffatome, die nicht weiterreagieren können, aus. In diesem Sinne enthalten primäre, sekundäre und tertiäre Aminogruppen ein reaktives Stickstoffatom, Imidazol jedoch zwei.

Die oben angegebenen Amine können in Mischung mit mindestens einer Aminosäure oder deren Salz eingesetzt werden. Beispiele für Aminosäuren sind Glycin, Alanin, Asparaginsäure, Glutaminsäure, Asparagin, Glutamin, Lysin, Arginin, Threonin, 2-Phenylglycin, 3-Aminopropionsäure, 4-Aminobuttersäure, 6-Aminocapronsäure, 11-Aminoundecansäure, Iminodiessigsäure, Sarcosin, 1-Carboxymethylpiperazin, 1,4-Bis(carboxymethyl)piperazin, 1-Carboxymethylimidazol, Imidazolcarbonsäure, Anthranilsäure, Sulfanilsäure, Amidosulfonsäure, Aminomethylsulfonsäure, Aminoethylsulfonsäure, deren Salze und Mischungen davon. Vorzugsweise werden pro Mol reaktiver Stickstoffgruppen in den Aminen 0,1 bis 2 Mol der Aminosäuren eingesetzt.

Reaktionsprodukte der genannten Amine mit mindestens einem anionische Gruppen enthaltenden Alkylierungsmittel können als Komponente (a) im erfindungsgemäßen Verfahren eingesetzt werden und sind in den amphoteren auf Amin basierenden Polymeren mit einer netto-kationischen Ladung einkondensiert enthalten. Beispiele für anionische Gruppen enthaltende Alkylierungsmittel sind 2-Chloressigsäure, 3-Chlorpropionsäure, 2-Chlorethansulfonsäure, Epoxybernsteinsäure, Propansulton, 3-Chlor-2-hydroxypropansulfonsäure und deren Mischungen. Weitere geeignete anionische Gruppen enthaltende Alkylierungsmittel sind monoethylenisch ungesättigte Säuren wie Acrylsäure, Methacrylsäure, Maleinsäure, Itaconsäure und Vinylsulfonsäure. Diese Gruppe Alkylierungsmittel reagiert mit den NH-Gruppen der Amine im Sinne einer Michael-Addition. Pro Mol der NH-Gruppen der Amine wird bei der Herstellung der amphoteren auf Amin basierenden Polymere mit einer netto-kationischen Ladung 0,04 bis 0,6 Mol der anionische Gruppen enthaltenden Alkylierungsmittel eingesetzt.

Eine bevorzugte Gruppe polykationischer Kondensationsprodukte der Polyelektrolytkomplexe ist erhältlich durch Kondensation von
(i) Piperazin, 1-Alkylpiperazinen mit 1 bis 25 C-Atomen in der Alkylgruppe, 1,4-Dialkylpiperazinen mit 1 bis 25 C-Atomen in der Alkylgruppe, 1,4-Bis-(3-aminopropyl)piperazin, 1-(2-Aminoethyl)piperazin, 1-(2-Hydroxyalkyl)piperazinen mit 2 bis 25 C-Atomen in der Alkylgruppe, Imidazol, C₁- bis C₂₅-Alkylimidazolen, Aminoalkoholen, linearen, verzweigten oder cyclischen Alkylaminen, anderen Alkylendiaminen, Polyetherdiaminen, Polyalkylenpolyaminen oder Gemischen der genannten Verbindungen mit
(ii) Epichlorhydrin, Bishalogenhydrinen von C₂- bis C₈-Diolen, Bisglycidylethern von C₂- bis C₁₈-Diolen, Bisglycidylethern von Polyalkylenglykolen, Bisepoxibutan und/oder Alkylendihalogeniden
im Molverhältnis 2 : 1 bis 1 : 1,5 und gegebenenfalls Quaternierung der Kondensationsprodukte. Die kationische Komponente dieser Polyelektrolytkomplexe ist beispielsweise aus der WO-A-98/17762 bekannt.

Die Polyelektrolytkomplexe enthalten vorzugsweise als kationische Komponente (a) polykationische Kondensationsprodukte, die erhältlich sind durch Kondensation von
(i) Piperazin, 1-(2-Hydroxyethyl)piperazin, 1-(2-Aminoethyl)piperazin, Imidazol, C₁- bis C₃-Alkylimidazolen oder Mischungen der genannten Verbindungen mit
(ii) 1,2-Dichlorethan, 1,2-Dichlorpropan, 1,3-Dichlorpropan, 1,4-Dichlorbutan, Epichlorhydrin, Bischlorhydrinethern von Diolen, Bischlorhydrinethern von Polyalkylenglykolen, Bischlorhydrinethern von Polytetrahydrofuranen, Bisepoxybutan oder Mischungen der genannten Verbindungen und
(iii) Quaternierung der Kondensationsprodukte mit Alkylhalogeniden, Epoxiden, Chloressigsäure, 2-Chlorethansulfonsäure, Chlorpropionsäure, Epoxibernsteinsäure, Propansulton, 3-Chlor-2-hydroxypropansulfonsäure, Dimethylsulfat und/oder Diethylsulfat oder Oxidation der tertiären Stickstoffatome der Kondensationsprodukte zu N-Oxiden.

Besonders bevorzugt sind solche Polyelektrolytkomplexe, die als kationische Komponente (a) polykationische Kondensationsprodukte enthalten, die erhältlich sind durch Kondensation von
(i) Piperazin, Imidazol oder deren Gemischen mit (ii) Epichlorhydrin, wobei die Kondensationsprodukte Molmassen Mw von 500 bis 1 Million und eine Ladungsdichte von 0,8 bis 8 mequiv/g haben, sowie Polyelektrolytkomplexe, bei denen mindestens 80% der NH-Gruppen der kationischen Komponente (a) in quaternierter Form oder als N-Oxide vorliegen.

Sofern die Quaternierung mit Quaternierungsmitteln vorgenommen wird, die eine anionische Gruppe aufweisen, wie Chloressigsäure oder 2-Chlorethansulfonsäure, wird sie nur soweit geführt, daß die entstehenden quaternierten amphoteren Kondensationsprodukte noch eine netto-kationische Ladung tragen. Die Ladungsdichte der kationischen Komponente beträgt beispielsweise 0,1 bis 8, vorzugsweise 0,5 bis 7 Milliäquivalent/g. Die Molmassen der Kondensationsprodukte liegen in dem Bereich von 500 bis 1 000 000 und betragen vorzugsweise 1000 bis 100 000. Die Amin-Epichlorhydrinkondensate tragen mindestens 3 kationische oder potentiell kationische, basische Stellen pro Polymermolekül. Die Ladungen können auch nach der Kondensation durch polymeranaloge Umsetzung oder durch Cokondensation von Epichlorhydrin mit geeigneten Aminen erreicht werden.

Als Komponente (a) geeignete amphotere Polymere, die eine netto-kationische Ladung tragen, sind beispielsweise auch dadurch erhältlich, daß man
(a) mindestens 1 Amin aus der Gruppe der linearen Alkylamine, verzweigten Alkylamine, Cycloalkylamine, Alkoxyamine, Aminoalkohole, cyclischen Amine mit mindestens 1 Stickstoffatom im Ring, Alkylendiaminen, Polyetherdiaminen, Polyalkylenpolyamine oder Mischungen der genannten Amine mit mindestens eine anionische Gruppe enthaltenden Alkylierungsmittel wie Chloressigsäure in der Weise umsetzt, daß die Umsetzungsprodukte pro Mol NH-Gruppen in den Aminen mit 0,04 bis 0,6 Mol anionische Gruppen enthaltenden Alkylierungsmittel, substituiert sind und die Umsetzungsprodukte anschließend mit
(b) mindestens einem Vernetzungsmittel im Molverhältnis (a):(b) von 2:1 bis 1:1,5 reagieren läßt. So kann man beispielsweise zunächst Imidazol mit 3-Chlor-2-hydroxypropansulfonsäure oder Chloressigsäure in wäßriger Lösung bei Temperaturen von beispielsweise 60 bis 100°C umsetzen und das Umsetzungsprodukt dann mit Epichlorhydrin vernetzen.

Das Ladungsverhältnis zwischen den anionischen und kationischen Polymeren in den Polyelektrolytkomplexen beträgt 0,01 bis 20, vorzugsweise 0,1 bis 5.

Geeignete, anionische Gruppen enthaltende Verbindungen (b) enthalten mindestens drei anionische Gruppen, zum Beispiel Polysäuren wie Zitronensäure, Butantetracarbonsäure, Cyclopentantetracarbonsäure, Sulfoisophthalsäure und Iminodibernsteinsäure und Polymere von säuregruppenhaltigen Monomeren wie Homo- und Copolymerisate von monoethylenisch ungesättigten C₃- bis C₁₀-Carbonsäuren oder deren Anhydriden, z.B. Acrylsäure, Methacrylsäure, Acrylsäureanhydrid, Methacrylsäureanhydrid, Maleinsäure, Maleinsäureanhydrid, Fumarsäure, Crotonsäure, Itaconsäure, Itaconsäureanhydrid, Citraconsäure, Mesaconsäure, Methylenmalonsäure, 1,2,3,6-Tetrahydrophthalsäureanhydrid, 2-Acrylamido-2-methylpropansulfonsäure, Allylsulfonsäure, Methallylsulfonsäure, Vinylsulfonsäure, Styrolsulfonsäure sowie Salze der genannten Monomeren. Die anionischen Monomeren sind in Wasser löslich bzw. lösen sich in partiell oder vollständig mit Basen neutralisierter Form. Unter wasserlöslichen Monomeren sollen im vorliegenden Zusammenhang alle anionischen Monomeren verstanden werden, die eine Wasserlöslichkeit bei 20°C von mehr als 20 g/l haben. Zur Herstellung der Salze der hydrophilen Monomeren verwendet man beispielsweise Alkalimetallbasen, Erdalkalimetallbasen und Ammoniak oder Amine. Bevorzugte Salze der hydrophilen Monomeren sind die Natrium- und Kalisalze sowie die Ammoniumsalze, die durch Neutralisation der Säuregruppen der Monomeren mit z.B. Natronlauge, Kalilauge oder Ammoniak erhältlich sind.

Weitere geeignete anionische Polymere sind Homo- und Copolymerisate von beispielsweise Halbestern aus Maleinsäure und Alkoholen mit 1 bis 25 C-Atomen oder Halbamiden der Maleinsäure.

Als anionische Polymere kommen außerdem Copolymerisate aus Maleinsäureanhydrid mit C₄- bis C₁₂-Olefinen, besonders bevorzugt C₈-Olefine wie Octen-1 und Diisobuten in Betracht. Ganz besonders bevorzugt ist Diisobuten. Das molare Verhältnis zwischen Maleinsäureanhydrid und Olefin liegt z.B. im Bereich von 0,9 : 1 bis 3 : 1, bevorzugt von 0,95 : 1 bis 1,5 : 1. Diese Copolymerisate werden in hydrolysierter Form als wäßrige Lösung oder Dispersion eingesetzt, wobei die Anhydridgruppe geöffnet vorliegt und die Carboxylgruppen vorzugsweise zum Teil oder ganz neutralisiert sind. Zur Neutralisation werden beispielsweise folgende Basen eingesetzt: Alkalimetallbasen, wie Natriumhydroxid, Kaliumhydroxid, Natriumcarbonat, Kaliumcarbonat, Erdalkalisalze wie Calciumhydroxid, Calciumcarbonat, Magnesiumhydroxid, Ammoniak, primäre, sekundäre oder tertiäre Amine wie Triethylamin, Triethanolamin, Diethanolamin etc. Gegebenenfalls können die bevorzugten Copolymerisate aus Maleinsäureanhydrid mit C₄-C₁₂-Olefinen auch polymeranalog an der Anhydridfunktion teilweise umgesetzt werden. Hierzu eignen sich beispielsweise Alkohole oder Amine mit 1 bis 25 Kohlenstoffatomen, weiterhin auch alkoxilierte Alkohole.

Bevorzugt in Betracht kommende anionische Polymere (b) sind Homound Copolymerisate von monoethylenisch ungesättigten C₃- bis C₈-Carbonsäuren, Homo- und Copolymerisate von Sulfonsäuregruppen enthaltenden Monomeren, Homo- und Copolymerisate von Phosphonsäuregruppen enthaltenden Monomeren, wasserlösliche Salze der genannten Polymeren und Mischungen der genannten Polymeren.

Die Copolymerisate werden nach bekannten Verfahren der radikalischen Polymerisation hergestellt, wie z.B. der Lösungspolymerisation, Emulsionspolymerisation, Dispersionspolymerisation, Fällungspolymerisation, Schmelzpolymerisation. Als Löse- oder Verdünnungsmittel kommen die üblichen Verbindungen in Frage, wie z.B. Wasser, Alkohole, Ketone, Ester, Aliphaten, Aromaten oder Mischungen wie z.B. Wasser/Isopropanol-Gemische. Als Löse- bzw. Verdünnungsmittel kann auch eines oder mehrere der Monomere eingesetzt werden bzw. kann auf den Einsatz eines Löse- oder Verdünnungsmittels völlig verzichtet werden. Die Polymerisationen können sowohl als Batch-Reaktion, als auch mit einem oder mehreren Zuläufen gefahren werden. Hierbei können die Zulaufzeiten und die Mengen pro Zeiteinheit einzelner Komponenten variiert werden. Dadurch lassen sich Kenngrößen wie Copolymerzusammensetzung, mittleres Molekulargewicht oder die Molekulargewichtsverteilung charakteristisch steuern.

Wasserlösliche Polyanionen haben z.B. Molgewichte M_{w} von 1000 bis 10.000.000, vorzugsweise 2000 bis 500.000. Insbesondere eignen sich als Komponente (b) der erfindungsgemäßen Polyelektrolytkomplexe Polycarbonsäuren mit Molgewichten M_{w} von 1000 bis 250.000 in der unneutralisierten, teilweise neutralisierten oder vollständig neutralisierten Form. Einzelne Beispiele für wasserlösliche anionische Polymere (b) sind:
Polyacrylsäure mit Molgewichten von 1000 bis 250.000,
Polymethacrylsäure mit Molgewichten von 1000 bis 250.000,
Polymaleinsäure mit Molgewichten von 200 bis 5000,
Co- oder Terpolymere aus Acrylsäure, Methacrylsäure oder Maleinsäure wie beispielsweise
Acrylsäure-Methacrylsäurecopolymere mit Molgewichten von 1000 bis 100.000
Acrylsäure-Maleinsäurecopolymere mit Molgewichten von 1000 bis 100.000
Methacrylsäure-Maleinsäurecopolymere mit Molgewichten von 1000 bis 100.000

Weitere geeignete Comonomere sind beispielsweise Acrylnitril, Methacrylnitril, Styrol, Acrylsäuremethylester, Methacrylsäuremethylester, Methacrylsäureethylester, Hydroxyethyl(meth)acrylat, Hydroxypropyl(meth)acrylat, Alkylpolyethylenglykol(meth)acrylat, Allylalkohol, Acrylamid, Methacrylamid, N-Dimethylacrylamid, Vinylacetat, Vinylpropionat, Vinylphosphonat, Allylphosphonat, N-Vinylpyrrolidon, N-Vinylcaprolactam, N-Vinylformamid, Vinylphosphonsäure. Weiterhin ist es auch möglich, in untergeordnetem Maße (< 10 Gew.-%) an kationischen Comonomeren einzupolymerisieren, solange die entstehenden Copolymeren eine netto-anionische Ladung tragen. Beispiele für Polymerisate, die zu mindestens 10 Gew.-% ungesättigte Carbonsäuren einpolymerisiert enthalten, sind:
Styrol-Acrylsäurecopolymere mit Molgewichten von 1000 bis 100.000
Styrol-Maleinsäurecopolymere mit Molgewichten von 1000 bis 100.000
Olefin-Maleinsäurecopolymere mit C₂- bis C₁₅₀₀-Olefinen, wie beispielsweise
Isobuten-Maleinsäurecopolymere mit Molgewichten von 1000 bis 10.000
Diisobuten-Maleinsäurecopolymere mit Molgewichten von 1000 bis 10.000
C₁₂-Olefin-Maleinsäurecopolymere mit Molgewichten von 1000 bis 10.000
C_{20/24}-Olefin-Maleinsäurecopolymere mit Molgewichten von 1000 bis 10.000
Vinylacetat-Acrylsäurecopolymere mit Molgewichten von 1000 bis 100.000
Vinylacetat-Maleinsäurecopolymere mit Molgewichten von 1000 bis 100.000
Vinylacetat-Acrylsäure-Maleinsäureterpolymere mit Molgewichten von 1000 bis 100.000
Acrylamid-Acrylsäurecopolymere mit Molgewichten von 1000 bis 100.000
Polystyrolsulfonat mit Molgewichten von 1000 bis 250.000

Weitere anionische Polymere sind Homo- und Cokondensate von Asparaginsäure und Lysin, z.B. Polyasparaginsäure mit Molmassen M_{w} von 1000 bis 100.000.

Gegenstand der Erfindung ist außerdem ein Verfahren zur Herstellung von Polyelektrolytkomplexen durch Mischen von kationischen Polymeren mit anionischen Polymeren. Erfindungsgemäß werden
(a) kationische Kondensate aus
   (i) mindestens einem Amin und
   (ii) einem Vernetzungsmittel aus der Gruppe der Epihalogenhydrine, Bishalogenhydrine von Diolen, Bishalogenhydrine von Polyalkylenglykolen, Bishalogenhydrine von Polytetrahydrofuranen, Alkylendihalogenide, Alkylentrihalogenide, Bisepoxide, Trisepoxide, Tetraepoxide und/oder Mischungen der genannten Verbindung und
(b) anionische Verbindungen mit mindestens drei anionischen gruppen eingesetzt.

Die Polyelektrolytkomplexe können entweder als mikroskopisch oder makroskopisch 2. Phase in wäßrigen Systemen und Formulierungen vorliegen oder homogen gelöst sein. Die Polyelektrolytkomplexe werden vorzugsweise durch Vereinigen wäßriger Lösungen der kationischen und anionischen Polymeren, durch Einbringen eines anionischen Polymerisates in eine Lösung eines kationischen Polymeren oder durch Einbringen eines kationischen Polymerisats in eine Lösung von anionischen Polymeren hergestellt. Man kann jedoch auch Polyelektrolytkomplexe durch Mischen von anionischen und kationischen Polymeren in geeigneten gemeinsamen Lösungsmitteln oder in Abwesenheit von Lösemitteln herstellen. Bevorzugt ist jedoch die Herstellung der Polyelektrolytkomplexe in wäßrigem Medium. Zur Herstellung der Polyelektrolytkomplexe mischt man z.B. eine wäßrige Lösung, die 1 bis 60 Gew.-%, vorzugsweise 2 bis 55 Gew.-%, eines kationischen Kondensats (a) gelöst enthält, mit einer 1 bis 60 gew.-%igen wäßrigen Lösung eines anionischen Polymeren (b). Die wäßrige Lösung des anionischen Polymers enthält vorzugsweise 2 bis 55 Gew.-% anionisches Polymer in gelöster Form.

Vorzugsweise erfolgt die Herstellung der Polyelektrolytkomplexe durch turbulentes Mischen. Eine weitere bevorzugte Ausführungsform zur Herstellung der Polyelektrolytkomplexe ist das gemeinsame Sprühen der Lösung eines kationischen Kondensats und der Lösung eines anionischen Polymers.

Man erhält dabei entweder homogene Lösungen oder Dispersionen von Polyelektrolytkomplexen. Das Mischen der beiden unterschiedlich geladenen Polymeren kann beispielsweise in einem Rührkessel oder auch in einer turbulenten Strömung z.B. in einer Düse erfolgen. Sofern die Polyelektrolytkomplexe in Form einer Lösung oder Dispersion vorliegen, kann das Verdünnungsmittel durch beispielsweise Sprühen der Lösungen oder Dispersionen unter Verdampfen des Lösemittels entfernt werden. Man erhält dann pulverförmige Polyelektrolytkomplexe.
In den Polyelektrolytkomplexen beträgt das Ladungsverhältnis von anionischen zu kationischen Polymeren 0,01 bis 20 und liegt bevorzugt in dem Bereich von 0,1 bis 5.

Die kationische Komponente der Polyelektrolytkomplexe wird seit langem als Hilfsmittel bei der Textilveredelung bzw. der Nachbehandlung von gewaschenem Textilgut verwendet. Eine breite Anwendung in komplexen Formulierungen, in denen vielfältige Wechselwirkungen der Bestandteile untereinander die Wirkungsweise der einzelnen Formulierbestandteile verändern können, ist aber aufgrund der starken Wechselwirkung der kationischen Polymeren mit den meist anionischen Dispergiermitteln, Detergentien oder Emulgatoren nicht möglich. Dagegen führt die Komplexbildung zwischen kationischen und anionischen Polymeren zu einem auch in sehr verdünnten Medien sehr stabilen Aggregat. Eine starke Wechselwirkung mit niederen molekularen anionischen Formulierungsbestandteilen wird aufgrund von Ladungswechselwirkungen in den Komplexen verhindert. Die Wirkung der kationischen Kondensate bleibt dagegen in den erfindungsgemäßen Polyelektrolytkomplexen vergleichbar. Dadurch ergibt sich die Möglichkeit, die Wirkung von Polykationen in komplexe Formulierungen mit vielen Wechselwirkungsmöglichkeiten einzuarbeiten. Beim Einsatz der Polyelektrolytkomplexe in Waschmitteln oder Additiven für die Textilwäsche erreicht man eine Gewebepflege, durch die das äußere Erscheinungsbild wie Farbeindruck, mechanische und mikromechanische Eigenschaften wie Härte, Flexibilität und Reißfestigkeit von Fäden, Fasern oder Geweben verbessert wird. Die textilen Materialien können zur Gewebepflege auch mit Lösungen oder Dispersionen der erfindungsgemäßen Komplexe getränkt, besprüht oder gestrichen werden.

### Beispiele

Die Ladungsdichten wurden mit Hilfe der Kolloid-Titration bestimmt, vgl. D. Horn, Progr. Colloid & Polymer Sci., Band 65, 251-264 (1978).

### Beispiel 1

50 ml einer wäßrigen Lösung (100 mg/l, pH 10) eines Imidazol-Epichlorhydrin-Kondensats im Gewichtsverhältnis 1 : 1,4 (M_{w} 8 kDa, Ladungsdichte 5,6 meq/g) wurden mit 50 ml einer wäßrigen Lösung (50 mg/l, pH 10) einer Polyacrylsäure (M_{w} 8 kDa, Ladungsdichte 11 meq/g) gemischt, auf 300 ml mit vollständig entsalztem Wasser verdünnt und für 5 min gerührt. Es entstand eine trübe Lösung des ladungsneutralisierten Komplexes.

### Beispiel 2

10 ml einer wäßrigen Lösung (500 mg/l, pH 10) eines Imidazol-Epichlorhydrin-Kondensats im Gewichtsverhältnis 1 : 1,4 (Mw 100 kDa, Ladungsdichte 5,6 meq/g) wurden mit 10 ml einer wäßrigen Lösung (500 mg/l, pH 10) einer Polyacrylsäure (M_{w} 8 kDa, Ladungsdichte 11 meq/g) gemischt, mit vollständig entsalztem Wasser (pH 10) auf 300 ml aufgefüllt und für 5 min gerührt. Es entstand eine klare Lösung des Komplexes.

### Beispiel 3

100 ml einer wäßrigen Lösung (500 mg/l, pH 10) des im Beispiel 2 beschriebenen Imidazol-Epichlorhydrin-Kondensats (M_{w} 100 kDa, Ladungsdichte 5,6 meq/g) wurden mit 100 ml einer wäßrigen Lösung (500 mg/l, pH 10) einer Polyacrylsäure (M_{w} 8 kDa, Ladungsdichte 11 meq/g) gemischt, mit vollständig entsalztem Wasser (pH 10) auf 300 ml aufgefüllt und für 5 min gerührt. Es entstand eine klare Lösung eines anionischen Komplexes.

### Beispiel 4

100 ml einer wäßrigen Lösung (500 mg/l, pH 10) des im Beispiel 2 beschriebenen Imidazol-Epichlorhydrin-Kondensats (M_{w} 100 kDa, Ladungsdichte 5,6 meq/g) wurden mit 50 ml einer wäßrigen Lösung (100 mg/l, pH 10) einer Polyacrylsäure (M_{w} 8 kDa, Ladungsdichte 11 meq/g) gemischt, mit vollständig entsalztem Wasser (pH 10) auf 300 ml aufgefüllt und für 5 min gerührt. Es entstand eine klare Lösung eines kationischen Komplexes.

### Beispiel 5

100 ml einer wäßrigen Lösung (50 g/l, pH 7) des im Beispiel 2 beschriebenen Imidazol-Epichlorhydrin-Kondensats (M_{w} 100 kDa, Ladungsdichte 5,6 meq/g) wurden mit 100 ml einer wäßrigen Lösung (50 g/l, pH 7) einer Polyacrylsäure (M_{w} 8 kDa, Ladungsdichte ca. 8 meq/g) gemischt. Es entstand eine klare Lösung eines anionischen Komplexes.

### Beispiel 6

100 ml einer wäßrigen Lösung (5 g/l, pH 7, 10 g/min) des im Beispiel 2 beschriebenen Imidazol-Epichlorhydrin-Kondensats (M_{w} 100 kDa, Ladungsdichte 5,6 meq/g) wurden durch eine Düse in 100 ml einer wäßrigen Lösung (50 g/l, pH 7) einer Polyacrylsäure (M_{w} 8 kDa, Ladungsdichte ca. 8 meq/g) gedrückt. Es entstand eine klare Lösung eines anionischen Komplexes.

### Beispiel 7

100 ml einer wäßrigen Lösung (50 mg/l, pH 10) eines mit Benzylchlorid zu 70 mol% quaternierten Piperazin-Epichlorhydrin-Kondensats im Gewichtsverhältnis 1:1 (M_{w} 100 kDa, Ladungsdichte 3 meq/g) wurden mit 100 ml einer wäßrigen Lösung (50 mg/l, pH 10) eines Acrylsäure-Maleinsäure-Copolymers (M_{w} 70 kDa, Ladungsdichte ca. 12 meq/g) unter Rühren gemischt. Es entstand eine schwach trübe Lösung eines anionischen Komplexes.

## Patentansprüche

1. Polyelektrolytkomplexe aus kationischen und anionischen Polymeren, **dadurch gekennzeichnet, daß** sie aus
(a) kationischen Kondensaten aus (i) mindestens einem Amin aus der Gruppe der linearen Alkylamine, verzweigten Alkylamine, Cycloalkylamine, Alkoxyamine, Aminoalkohole, cyclischen Amine mit mindestens einem Stickstoffatom im Ring, Alkylendiamine, Polyetherdiamine, Polyalkylenpolyamide, Mischungen eines der genannten Amine mit mindestens einer Aminosäure oder einem Salz davon, Reaktionsprodukte der genannten Amine mit mindestens einem anionische Gruppen enthaltenden Alkylierungsmittel, wobei pro Mol NH-Gruppen der Amine 0,04 bis 0,6 Mol mit anionische Gruppen enthaltenden Alkylierungsmitteln substituiert sind, und deren Mischungen und (ii) einem Vernetzungsmittel aus der Gruppe der Epihalogenhydrine, Bishalogenhydrine von Diolen, Bishalogenhydrine von Polyalkylenglykolen, Bishalogenhydrine von Polytetrahydrofuranen, Alkylendihalogenide, Alkylentrihalogenide, Bisepoxide, Trisepoxide, Tetraepoxide und/oder Mischungen der genannten Verbindungen und/oder quaternierten kationischen Kondensaten aus (i) und (ii) sowie
(b) anionischen Verbindungen mit mindestens drei anionischen Gruppen
bestehen und daß das Ladungsverhältnis von anionischen zu kationischen Polymeren 0,01 bis 20 beträgt.

2. Polyelektrolytkomplexe nach Anspruch 1, **dadurch gekennzeichnet, daß** sie als kationische Komponente (a) polykationische Kondensationsprodukte enthalten, die erhältlich sind durch Kondensation von
(i) Piperazin, 1-Alkylpiperazinen mit 1 bis 25 C-Atomen in der Alkylgruppe, 1,4-Dialkylpiperazinen mit 1 bis 25 C-Atomen in der Alkylgruppe, 1,4-Bis-(3-aminopropyl)piperazin, 1-(2-Aminoethyl)piperazin, 1-(2-Hydroxyalkyl)piperazinen mit 2 bis 25 C-Atomen in der Alkylgruppe, Imidazol, C₁bis C₂₅-C-Alkylimidazolen, Aminoalkoholen, linearen, verzweigten oder cyclischen Alkylaminen, anderen Alkylendiaminen, Polyetherdiaminen, Polyalkylenpolyaminen oder Gemischen der genannten Verbindungen mit
(ii) Epichlorhydrin, Bishalogenhydrinen von C₂- bis C₈-Diolen, Bisglycidylethern von C₂- bis C₁₈-Diolen, Bisglycidylethern von Polyalkylenglykolen, Bisepoxibutan und/oder Alkylendihalogeniden
im Molverhältnis 2 : 1 bis 1 : 1,5 und gegebenenfalls Quaternierung der Kondensationsprodukte.

3. Polyelektrolytkomplexe nach Anspruch 1 oder 2, **dadurch gekennzeichnet, daß** sie als kationische Komponente (a) polykationische Kondensationsprodukte enthalten, die erhältlich sind durch Kondensation von
(i) Piperazin, 1-(2-Hydroxyethyl)piperazin, 1-(2-Aminoethyl)piperazin, Imidazol, C₁- bis C₃-Alkylimidazolen oder Mischungen der genannten Verbindungen mit
(ii) 1,2-Dichlorethan, 1,2-Dichlorpropan, 1,3-Dichlorpropan, 1,4-Dichlorbutan, Epichlorhydrin, Bischlorhydrinethern von Diolen, Bischlorhydrinethern von Polyalkylenglykolen, Bischlorhydrinethern von Polytetrahydrofuranen, Bisepoxibutan oder Mischungen der genannten Verbindungen und
(iii) Quaternierung der Kondensationsprodukte mit Alkylhalogeniden, Epoxiden, Chloressigsäure, 2-Chlorethansulfonsäure, Chlorpropionsäure, Epoxibernsteinsäure, Propansulfon, 3-Chlor-2-hydroxypropansulfonsäure, Dimethylsulfat und/oder Diethylsulfat oder Oxidation der tertiären Stickstoffatome der Kondensationsprodukte zu N-Oxiden.

4. Polyelektrolytkomplexe nach einem der Ansprüche 1 bis 3, **dadurch gekennzeichnet, daß** sie als kationische Komponente
(a) polykationische Kondensationsprodukte enthalten, die erhältlich sind durch Kondensation von
(i) Piperazin, Imidazol oder deren Gemischen mit (ii) Epichlorhydrin, wobei die Kondensationsprodukte Molmassen Mw von 500 bis 1 Million und eine Ladungsdichte von 0,1 bis 8 mequiv/g haben.

5. Polyelektrolytkomplexe nach einem der Ansprüche 1 bis 4, **dadurch gekennzeichnet, daß** mindestens 80% der NH-Gruppen der kationischen Komponente (a) in quaternierter Form oder als N-Oxide vorliegen.

6. Polyelektrolytkomplexe nach einem der Ansprüche 1 bis 5, **dadurch gekennzeichnet, daß** die polykationischen Kondensationsprodukte eine Molmasse Mw von 1000 bis 100 000 haben.

7. Polyelektrolytkomplexe nach einem der Ansprüche 1 bis 6, **dadurch gekennzeichnet, daß** sie als anionische Komponente (b) Zitronensäure, Butantetracarbonsäure, Cyclopentantetracarbonsäure, Sulfoisophthalsäure, Iminodibernsteinsäure oder ein anionisches Polymer aus der Gruppe der aus Polymerisate von monoethylenisch ungesättigten C₃- bis C₁₀-Carbonsäuren, Polymerisate von Sulfonsäuregruppen enthaltenden Monomeren, Polymerisate von Phosphonsäuregruppen enthaltenden Monomeren und Kondensate der Asparaginsäure enthalten.

8. Polyelektrolytkomplexe nach einem der Ansprüche 1 bis 7, **dadurch gekennzeichnet, daß** sie aus
(a) einem kationischen Kondensat aus Imidazol und Epichlorhydrin und
(b) einem anionischen Polymer aus Acrylsäure oder einem Copolymerisat aus Acrylsäure und Maleinsäure
bestehen.

9. Verfahren zur Herstellung von Polyelektrolytkomplexen durch Mischen von kationischen Polymeren mit anionischen Polymeren, **dadurch gekennzeichnet, daß** man
(a) kationische Kondensate aus (i) mindestens einem Amin und (ii) einem Vernetzungsmittel aus der Gruppe der Epihalogenhydrine, Bishalogenhydrine von Diolen, Bishalogenhydrine von Polyalkylenglykolen, Bishalogenhydrine von Polytetrahydrofuranen, Alkylendihalogenide, Alkylentrihalogenide, Bisepoxide, Trisepoxide, Tetraepoxide und/oder Mischungen der genannten Verbindungen und
(b) eine anionische Verbindung mit mindestens drei anionischen Gruppen
einsetzt.

10. Verfahren zur Herstellung der Polyelektrolytkomplexe nach Anspruch 9, **dadurch gekennzeichnet, daß** man eine wäßrige Lösung, die 1 bis 60 Gew.-% eines kationischen Kondensats (a) gelöst enthält, mit einer 1 bis 60 gew.-%igen wäßrigen Lösung eines anionischen Polymeren (b) mischt.

11. Verfahren nach Anspruch 10, **dadurch gekennzeichnet, daß** die Herstellung der Polyelektrolytkomplexe durch turbulentes Mischen erfolgt.

12. Verfahren nach Anspruch 10, **dadurch gekennzeichnet, daß** die Herstellung der Polyelektrolytkomplexe durch gemeinsames Sprühen der Lösung eines kationischen Kondensats (a) und der Lösung einer anionischen Verbindung (b) aus der Gruppe bestehend aus Zitronensäure, Butantetracarbonsäure, Cyclopentantetracarbonsäure, Sulfoisophthalsäure, Iminodibernsteinsäure, einem Polymerisat einer monoethylenisch ungesättigten C₃- bis C₁₀-Carbonsäure, einen Polymerisat eines Sulfonsäuregruppen enthaltenden Monomers, einem Polymer eines Phosphonsäuregruppen enthaltenden Monomers, Kondensaten der Asparaginsäure und deren Mischungen.

## Claims

1. A polyelectrolyte complex of cationic and anionic polymers which consists of
(a) cationic condensates of (i) at least one amine from the group consisting of linear alkylamines, branched alkylamines, cycloalkylamines, alkoxyamines, aminoalcohols, cyclic amines having at least one nitrogen atom in the ring, alkylenediamines, polyetherdiamines, polyalkylenepolyamides, mixtures of one of said amines with at least one amino acid or a salt thereof, reaction products of said amines with at least one alkylating agent containing anionic groups, from 0.04 to 0.6 mol per mol of NH groups of the amines being substituted by alkylating agents containing anionic groups, and mixtures thereof and (ii) a crosslinking agent from the group consisting of epihalohydrins, bishalohydrins of diols, bishalohydrins of polyalkylene glycols, bishalohydrins of polytetrahydrofurans, alkylene dihalides, alkylene trihalides, bisepoxides, trisepoxides, tetraepoxides and/or mixtures of said compounds, and/or quaternized cationic condensates of (i) and (ii), and also
(b) anionic compounds having at least three anionic groups
and in which the charge ratio between anionic and cationic polymers is from 0.01 to 20.

2. A polyelectrolyte complex as claimed in claim 1 which comprises, as cationic component (a), polycationic condensation products obtainable by condensation of
(i) piperazine, 1-alkylpiperazines having 1 to 25 carbon atoms in the alkyl group, 1,4-dialkylpiperazines having 1 to 25 carbon atoms in the alkyl groups, 1,4-bis(3-aminopropyl)piperazine, 1-(2-aminoethyl)piperazine, 1-(2-hydroxyalkyl)-piperazines having 2 to 25 carbon atoms in the alkyl group, imidazole, C₁- to C₂₅-C-alkylimidazoles, aminoalcohols, linear, branched or cyclic alkylamines, other alkylenediamines, polyetherdiamines, polyalkylenepolyamines, or mixtures of said compounds with
(ii) epichlorohydrin, bishalohydrins of C₂- to C₈-diols, bisglycidyl ethers of C₂- to C₁₈-diols, bisglycidyl ethers of polyalkylene glycols, bisepoxybutane and/or alkylene dihalides
in a molar ratio of from 2 : 1 to 1 : 1.5, and, if desired, quaternization of the condensation products.

3. A polyelectrolyte complex as claimed in claim 1 or 2 which comprises, as cationic component (a), polycationic condensation products obtainable by condensation of
(i) piperazine, 1-(2-hydroxyethyl)piperazine, 1-(2-aminoethyl)piperazine, imidazole, C₁- to C₃-C-alkylimidazoles, or mixtures of said compounds with
(ii) 1,2-dichloroethane, 1,2-dichloropropane, 1,3-dichloropropane, 1,4-dichlorobutane, epichlorohydrin, bischlorohydrin ethers of diols, bischlorohydrin ethers of polyalkylene glycols, bischlorohydrin ethers of polytetrahydrofurans, bisepoxybutane, or mixtures of said compounds, and
(iii) quaternization of the condensation products using alkyl halides, epoxides, chloroacetic acid, 2-chloroethanesulfonic acid, chloropropionic acid, epoxysuccinic acid, propane sulfone, 3-chloro-2-hydroxypropanesulfonic acid, dimethyl sulfate and/or diethyl sulfate, or oxidation of the tertiary nitrogen atoms of the condensation products to N-oxides.

4. A polyelectrolyte complex as claimed in one of claims 1 to 3 which comprises, as cationic component (a), polycationic condensation products obtainable by condensation of
(i) piperazine, imidazole or mixtures thereof with (ii) epichlorohydrin, where the condensation products have molecular weights Mw of from 500 to 1 million and have a charge density of from 0.1 to 8 mequiv/g.

5. A polyelectrolyte complex as claimed in one of claims 1 to 4, wherein at least 80% of the NH groups of the cationic component (a) are in quaternized form or as N-oxides.

6. A polyelectrolyte complex as claimed in one of claims 1 to 5, wherein the polycationic condensation products have a molecular weight Mw of from 1000 to 100,000.

7. A polyelectrolyte complex as claimed in one of claims 1 to 6 which comprises, as anionic component (b), citric acid, butanetetracarboxylic acid, cyclopentanetetracarboxylic acid, sulfoisophthalic acid, iminodisuccinic acid or an anionic polymer from the group consisting of polymers of monoethylenically unsaturated C₃- to C₁₀-carboxylic acids, polymers of monomers containing sulfonic acid groups, polymers of monomers containing phosphonic acid groups, and condensates of aspartic acid.

8. A polyelectrolyte complex as claimed in one of claims 1 to 7 which consists of
(a) a cationic condensate of imidazole and epichlorohydrin and
(b) an anionic polymer of acrylic acid or a copolymer of acrylic acid and maleic acid.

9. A process for the preparation of a polyelectrolyte complex by mixing cationic polymers with anionic polymers, which comprises employing
(a) cationic condensates of (i) at least one amine and (ii) a crosslinking agent from the group consisting of epihalohydrins, bishalohydrins of diols, bishalohydrins of polyalkylene glycols, bishalohydrins of polytetrahydrofurans, alkylene dihalides, alkylene trihalides, bisepoxides, trisepoxides, tetraepoxides and/or mixtures of said compounds, and
(b) an anionic compound having at least three anionic groups.

10. A process for the preparation of a polyelectrolyte complex as claimed in claim 9, wherein an aqueous solution comprising from 1 to 60% by weight of a cationic condensate (a) in dissolved form is mixed with a 1 to 60% strength by weight aqueous solution of an anionic polymer (b).

11. A process as claimed in claim 10, wherein the polyelectrolyte complex is prepared by turbulent mixing.

12. A process as claimed in claim 10, wherein the polyelectrolyte complex is prepared by joint spraying of the solution of a cationic condensate (a) and the solution of an anionic compound (b) from the group consisting of citric acid, butanetetracarboxylic acid, cyclopentanetetracarboxylic acid, sulfoisophthalic acid, iminodisuccinic acid, a polymer of a monoethylenically unsaturated C₃- to C₁₀-carboxylic acid, a polymer of a monomer containing sulfonic acid groups, a polymer of a monomer containing phosphonic acid groups, condensates of aspartic acid, and mixtures thereof.

## Revendications

1. Complexes de polyélectrolytes composés de polymères cationiques et anioniques, **caractérisé en ce qu'**ils comprennent
(a) des condensats cationiques composés (i) d'au moins une amine issue du groupe des alkylamines linéaires, des alkylamines ramifiées, des cycloalkylamines, des alcoxyamines, des aminoalcools, des amines cycliques ayant au moins un atome d'azote dans le cycle, des alkylènediamines, des polyétherdiamines, des polyalkylènepolyamides, des mélanges composés d'une amines citées et d'au moins un acide aminé ou d'un sel de celui-ci, des produits réactionnels des amines citées avec au moins un agent d'alkylation contenant des groupes anioniques, dans lesquels 0,4 à 0,6 mole, par mole de groupes NH des amines, est substitué par des agents d'alkylation contenant des groupes anioniques, et leurs mélanges et (ii) un agent de réticulation issu du groupe des épihalogénohydrines, des bishalogénohydrines de diols, des bishalogénohydrines de polyalkylèneglycols, des bishalogénohydrines de polytétrahydrofurannes, des dihalogénures d'alkylène, des trihalogénures d'alkylène, des bisépoxydes, des trisépoxydes, des tétraépoxydes et/ou des mélanges desdits cités et/ou des condensats cationiques quaternisés de (i) et (ii) ainsi que
(b) des composés anioniques comprenant au moins trois groupes anioniques,
et **en ce que** le rapport de charge des polymères anioniques aux polymères cationiques va de 0,01 à 20.

2. Complexes de polyélectrolytes selon la revendication 1, **caractérisé en ce qu'**ils comprennent en tant que composants cationiques (a), des produits de condensation polycationiques, que l'on peut obtenir par la condensation de
(i) la pipérazine, les 1-alkylpipérazines ayant 3 à 25 atomes de C dans le groupe alkyle, les 1,4-dialkylpipérazines ayant 1 à 25 atomes de C dans le groupe alkyle, la 1,4-bis-(3-aminopropyl)pipérazine, la 1-(2-aminoéthyl)pipérazine, les 1-(2-hydroxyalkyl)pipérazines ayant de 2 à 25 atomes de C dans le groupe alkyle, l'imidazole, les C-alkylimidazoles en C₁ à C₂₅, les aminoalcools, les alkylamines linéaires, ramifiées ou cycliques, d'autres alkylènediamines, les polyétherdiamines, les polyalkylènepolyamines ou les mélanges des composés cités avec
(ii) l'épichlorhydrine, les bishalogénohydrines de diols en C₂ à C₈, les éthers bisglycidyliques de diols en C₂ à C₁₈, les éthers bisglycidyliques de polyalkylèneglycols, le bisépoxybutane et/ou les dihalogénures d'alkylène
dans un rapport molaire allant de 2:3 à 1:1,5, et éventuellement par la quaternisation des produits de condensation.

3. Complexes de polyélectrolytes selon la revendication 1 ou 2, **caractérisé en ce qu'**ils contiennent, en tant que composant cationique (a), des produits de condensation polycationiques en tant que composant cationique (a) que l'on peut obtenir par la condensation de
(i) la pipérazine, la 1-(2-hydroxyéthyl)pipérazine, la 1-(2-aminoéthyl)pipérazine, l'imidazole, les alkylimidazoles en C₁ à C₃ ou les mélanges des composés cités avec
(ii) le 1,2-dichloréthane, le 1,2-dichloropropane, le 1,3-dichloropropane, le 1,4-dichlorobutane, l'épichlorhydrine, les éthers de bischlorhydrine de diols, les éthers de bischlorhydrine de polyalkylèneglycols, les éthers de bischlorhydrine des polytétrahydrofuranne, le bisépoxybutane ou les mélanges des composés cités et
(iii) par la quaternisation des produits de condensation avec des halogénures d'alkyle, des époxydes, de l'acides chloroacétique, l'acide 2-chloroéthanosulfonique, l'acide chloropropionique, l'acide époxysuccinique, la propanesulfone, l'acide 3-chloro-2-hydroxypropanosulfonique, le sulfate de diméthyle et/ou le sulfate de diéthyle, ou l'oxydation des atomes d'azote tertiaire des produits de condensation pour former des N-oxydes.

4. Complexes de polyélectrolytes selon l'une quelconque des revendications 1 à 3, **caractérisé en ce qu'**ils contiennent, en tant que composant cationique (a), des produits de condensations polycationiques que l'on peut obtenir par la condensation de
(i) la pipérazine, l'imidazole ou de leurs mélanges avec (ii) l'épichlorhydrine, les produits de condensation ayant une masse moléculaire Mm allant de 500 à 1 million et une densité de charge allant de 0,1 à 8 g .

5. Complexes de polyélectrolytes selon l'une quelconque des revendications 1 à 4, **caractérisé en ce qu'**au moins 80% des groupes N du composant cationique (a) se présentent sous forme quaternisée ou sous forme de N-oxydes.

6. Complexes de polyélectrolytes selon l'une quelconque des revendications 1 à 5, **caractérisé en ce que** les produits de condensation polycationiques ont une masse moléculaire Mm allant de 1000 à 100 000.

7. Complexes de polyélectrolytes selon l'une quelconque des revendications 1 à 6, **caractérisé en ce qu'**ils contiennent, en tant que composant anionique (b), l'acide citrique, l'acide butanetétracarboxylique, l'acide cyclopentanetétracarboxylique, l'acide sulfoisophtalique, l'acide iminodisuccinique ou un polymère du groupe formé par les polymères d'acides carboxyliques en C₃ à C₁₀ à insaturation monoéthylénique, des polymères de monomères contenant des groupes acide sulfonique, des polymères de monomères contenant des groupes acide phosphonique et des condensats d'acide aspartique.

8. Complexes de polyélectrolytes selon l'une quelconque des revendications 1 à 7, **caractérisé en ce qu'**ils comprennent
(a) un condensat cationique composé d'imidazole et d'épichlorhydrine et
(b) un polymère anionique composé d'acide acrylique ou un copolymère composé d'acide acrylique et d'acide maléique.

9. Procédé pour la préparation de complexes de polyélectrolytes au moyen du mélange de polymères cationiques avec des polymères anioniques, **caractérisé en ce que** l'on utilise
(a) des condensats cationiques composés (i) d'au moins une amine et (ii) d'un agent de réticulation issu du groupe des épihalogénohydrines, des bishalogénohydrines de diols, des bishalogénohydrines de polyalkylèneglycols, des bishalogénohydrines de polytétrahydrofurannes, des dihalogénures d'alkylène, des trihalogénures d'alkylène, des bisépoxydes, des trisépoxydes, des tétraépoxydes et/ou des mélanges desdits composés et
(b) un composé anionique comprenant au moins trois groupes anioniques.

10. Procédé pour la préparation des complexes de polyélectrolytes selon la revendication 9, **caractérisé en ce que** l'on mélange une solution aqueuse, qui contient de 1% à 60% en poids d'un condensat cationique (a) sous forme dissoute, avec 1% à 60% en poids d'une solution aqueuse d'un polymère anionique (b) .

11. Procédé selon la revendication 10, **caractérisé en ce que** l'on prépare les complexes de polyélectrolytes a lieu au moyen d'un mélange sous agitation.

12. Procédé selon la revendication 10, **caractérisé en ce que** l'on prépare les complexes de polyélectrolytes au moyen de pulvérisation conjointe de la solution d'un condensat cationique (a) et de la solution d'un composé anionique (b) issu du groupe formé par l'acide citrique, l'acide butanetétracarboxylique, l'acide cyclopentanecarboxylique, l'acide sulfoisophtalique, l'acide iminodisuccinique, un polymérisat d'un acide carboxylique en C₃ à C₁₀ à insaturation monoéthylénique, un polymérisat d'un monomère contenant des groupes acide sulfonique, un polymère d'un monomère contenant des groupes acide phosphonique, des condensats de l'acide aspartique et leurs mélanges.
